# EUROPEAN PATENT APPLICATION

(11) **EP 4 585 293 A1**
(43) Date of publication of application: **16.07.2025**
(21) Application number: 24151589.9
(22) Date of filing: 12.01.2024
(51) Int. Cl.: B01D 53/04

(54) **METHOD FOR OPERATING A DIRECT AIR CAPTURE PLANT AND DIRECT AIR CAPTURE PLANT**

(71) Applicant: Siemens Energy Global GmbH & Co. KG, 81739 München (DE)
(72) Inventor: Svensson, Oscar, 582 55 Linköping (SE); Myrén, Mikael, 602 21 Norrköping (SE); Jaksch, Peter, 60211 Norrköping (SE); Hjalmarsson, Christer, 61291 Finspong (SE)

(57) **Abstract**

The invention relates to a method for operating a direct air capture plant (2), with a reduced the energy consumption for steam production in the direct air capture plant (2). The method comprises the following steps:
- feeding a water flow into an evaporator (4) and heating up the water flow in the evaporator (4) to turn it into a steam flow,
- providing the steam flow to a direct air capture unit (10) comprising a contactor (12) in which a CO₂ sorbent is contained,
- injecting the steam flow through the contractor (12) to discharge CO₂ from the sorbent,
- directing the steam flow from the direct air capture unit (10) to a steam compressor (20), where the steam flow is compressed,
- feeding the compressed steam flow to the evaporator (4) where it transfers its heat to the water flow and condensates,
- discharging the condensate from the evaporator (4) and feeding it back to the evaporator (4) as the water flow, wherein
- a heat pump (28) provides additional heat the evaporator (4) for generation of the steam flow, wherein the heat pump (4) utilizes heat and/or cold from components of the direct air capture plant (2).

## Description

The invention relates to a method for operating a direct air capture plant. The invention also relates to a direct air capture plant.

Direct air capture (DAC) is a process of capturing carbon dioxide (CO₂) directly from an air stream. In a plant for direct air capture, steam can be used for releasing CO₂ from a sorbent. This process has a two-fold purpose: on the one hand it provides the necessary heat for the chemical process of releasing CO₂, and on the other hand it lowers the partial pressure of the released CO₂, speeding up the process even further.

WO 2023/144018 A1 discloses the use of a solid sorbent to capture and remove CO₂ from an air stream upon contact. During an adsorption phase, air is moved around the sorbent to provide the carbon dioxide contained in the air to the sorbent so that it can be adsorbed. During a desorption phase, the sorbent with the adsorbed carbon dioxide needs to be enclosed in a container, so that the released carbon dioxide can be captured. To desorb the carbon dioxide, the temperature is raised, and the partial pressure of the CO₂ is lowered. The latter is be done by purging with steam and/or lowering the absolute pressure in the sorbent container, wherein the steam is used for both purging and heating of the sorbent.

Since generating steam is a very energy intensive process, it is of great importance to reduce the energy consumption and to recover as much energy as possible. Heat or steam generation is the biggest consumer of electricity in the DAC plant. Between one half and two thirds of the total electrical input to the plant is used for this purpose. If heat is provided directly from electricity, the electricity consumption of the plant would increase accordingly, under circumstances putting the economic viability of the process far out of reach.

Another aspect of using steam is that the used steam needs to be condensed in order to separate the produced CO₂. Condensing can be done with cooling water. However, the cooling requirements, and hence the water consumption, are significant. In many areas of the world, the availability of large quantities of water is limited.

The object of the invention is therefore to reduce the energy consumption for steam production in a direct air capture plant.

The object of the invention is achieved by the independent claims. The dependent claims describe advantageous developments and modifications of the invention.

In accordance with the invention there is provided a method for operating a direct air capture plant, comprising the steps of:
- feeding a water flow into an evaporator and heating up the water flow in the evaporator to turn it into a steam flow,
- providing the steam flow to a direct air capture unit comprising a contactor in which a CO₂ sorbent is contained,
- injecting the steam flow through the contractor to discharge CO₂ from the sorbent,
- directing the steam flow from the direct air capture unit to a steam compressor, where the steam flow is compressed,
- feeding the compressed steam flow to the evaporator where it transfers its heat to the water flow and at least partly condensates,
- discharging the condensate from the evaporator and feeding it back to the evaporator as the water flow, wherein
- a heat pump provides additional heat to the evaporator for generation of the steam flow, wherein the heat pump utilizes heat and/or cold from components of the direct air capture plant.

In accordance with the invention there is also provided a direct air capture plant, comprising:
- an evaporator for producing a steam flow via heat transfer to a water flow,
- a steam line for the steam flow connecting the evaporator to a direct capture unit comprising a contactor in which a CO₂ sorbent is contained,
- an injection system configured to inject the steam flow through the contractor to discharge CO₂ from the sorbent,
- a return steam line connecting the direct capture unit to a steam compressor for compressing the steam flow,
- a hot steam line connecting the steam compressor to the evaporator, wherein within the evaporator the hot steam line is configured for heat transfer from the steam flow to the water flow,
- downstream from the hot steam line a condensate line for discharging the condensate out of the evaporator, wherein the condensate line is connected to a feed line for feeding the condensate flow back to the evaporator as the water flow,
- a heat pump connected to the evaporator via a heat pump line for generation of the steam flow, wherein the heat pump is configured to utilize heat and/or cold from components of the direct air capture plant.

The invention is based on the idea to reduce the energy consumption for the steam production by equipping the direct air capture (DAC) plant with a self-sustained heating system allowing for the plant to be self-sufficient in its heat production, meaning that no residual heat from other plants or processes is required for the DAC plant. With regard to its heating configuration, the DAC plant is operated in the stand-alone mode.

The self-sustained heating system is achieved in the first place by utilizing the heat from the steam compressor in order to evaporate the water flow in the evaporator. Moreover, the heating system includes the heat pump which provides additional heat for the evaporation process, wherein the operation of the heat pump is also carried out by the heat of the DAC process as well.

The heat pump operates two circuits: a hot circuit and a cold circuit. The heat for the heat pump cold side is derived from at least one heat or energy source within the DAC plant, e.g., from a cold steam condenser for the sorbent drying. Other heat or cold sources could be cooling of a compressed CO₂ stream and cooling of vacuum pumps and electrical motors. The circuit on the cold side of the heat pump could be a closed circuit (i.e. the released cold is returned to the source of heat for the cold side of the heat pump) or an open circuit (i.e. the released cold is directed to further components of the DAC plant, which are not the source of heat for the cold side of the heat pump or the cold es released to the environment). The hot circuit is preferably a closed circuit. The hot circuit circulates a fluid between the evaporator and heat pump, e.g. through a pump.

The steam in the DAC unit is used in a batch process, i.e., there is no continuous demand of steam during the operation of the DAC plant. Rather, steam generation is only required during a desorption phase of the of the contactor of the DAC unit. Hence, in a preferred embodiment, hot water for a cold side of the heat pump is stored. For this purpose, a first water tank is provided upstream of the cold side of the heat pump. In another preferred embodiment, cold water from the cold side of the heat pump is stored. This involves the utilization of a second water tank downstream of the cold side of the heat pump. Two tanks allow for buffering of hot and/or cold water, in particular during an absorption phase or operation mode of the of the contactor of the DAC unit, in which the sorbent in the contractor is absorbing CO₂ from the air flow flowing through it. The buffering of the cold and/or hot water contributes towards general operative fluctuations within the heating system and its consumers. Alternatively, the two tanks may be combined into one larger tank utilizing the temperature/density gradient of water, where sourcing input and offtake is located at different levels in relation to temperature needs. Such tank has warmer water at the top, and colder water at the bottom. Depending on the needs, the water can be extracted from a suitable height of the tank.

In yet another preferred embodiment, the cold water from the cold side of the heat pump is used to cool down a component of the direct air capture plant. Hence, a cold water line is connecting the cold side of the heat pump to another component of the direct air capture plant. Such component could be the plant units related to the CO₂ condenser or the CO₂ heat capture. This approach results in an optimal distribution of the cold water for cooling purposes wherever it is needed. Also, more than one component can be cooled down using the cold water from the heat pump.

Preferably, the condensate is stored before feeding it back to the evaporator. To store the condensate downstream of the evaporator, a first condensate tank is integrated in the condensate line. The discharged CO₂ (gas) and the water (liquid) are separated in the first condensate tank. The liquid water is then re-introduced to the evaporator for evaporation and generation of the steam flow.

Also preferably, a condensate stream from the steam flow upstream of the steam compressor is separated and added to the condensate from the evaporator. This is done by means of a second condensate tank upstream of the steam compressor, wherein a water line connects the second condensate tank with the condensate line from the evaporator, in particular with the first condensate tank. In order to facilitate the compression process, the condensate from the DAC unit is separated, while the remaining steam and CO₂ are transported to the steam compressor. The second condensate tank can also be fluidly connected to the cold side of the heat pump to provide the condensate as the heat source for the operation of the heat pump.

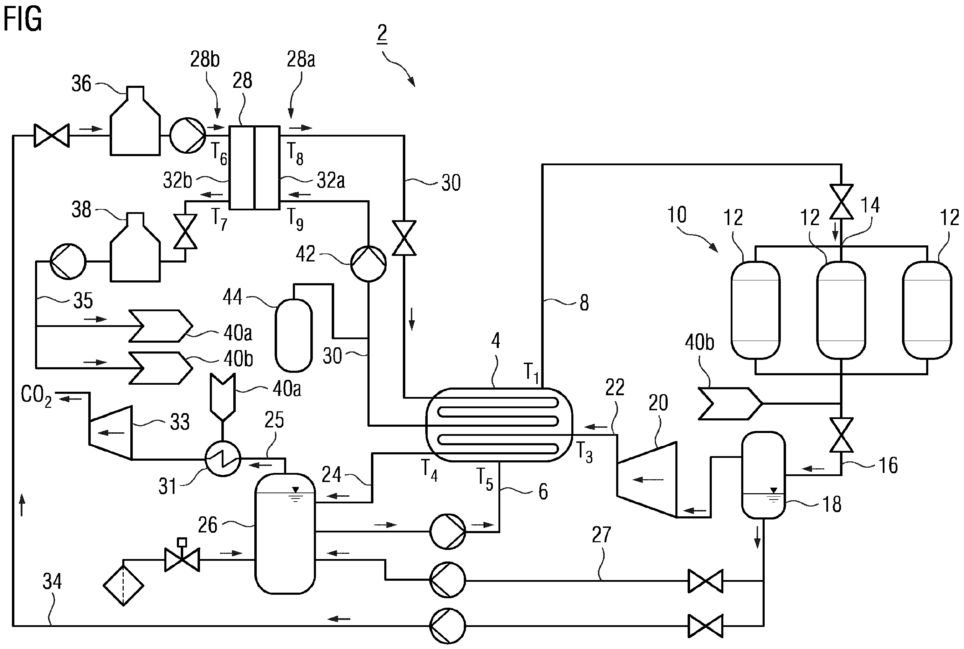

Embodiments of the invention are now described, by way of example only, with reference to the accompanying drawings, of which the only figure shows an exemplary DAC plant. The illustration in the drawings is in schematic form.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

The figure shows a direct air capture plant 2, comprising an evaporator 4 in which a water flow is fed in through a feed line 6, leaving the evaporator 2 as a steam flow at temperature T₁ through a steam line 8. The steam line 8 connects the evaporator 4 with a direct air capture (DAC) unit 10 comprising a number of contactors 12, i.e., containers in which a sorbent for the carbon dioxide, not shown in the figure, is contained. The DAC unit 10 comprises also an injection system 14 configured to inject the steam flow through the contractors 12 to purge the sorbent and discharge CO₂ from the sorbent. This process takes place during a desorption phase of the DAC unit. Also, the single contractors 12 of the DAC unit 10 may be in different phases for a given point of time, e.g. some are in the desorption phase discharging CO₂ from the sorbent by means of the steam, while others are in an absorption phase, in which air is fed though the contractors 12 so that CO₂ can be absorbed by the sorbent.

The steam loaded with CO₂ leaves the DAC unit 10 via a return steam line 16 at temperature T₂ which is lower than T₁. Condensate from leaving the contactors 12 is separated in a second condensate tank 18 arranged on the return steam line 16, while the remaining steam and CO₂ is transported to a steam compressor 20. A hot steam line 22 connects the compressor 20 back to the evaporator 4 and transports the hot, pressurized team at temperature T₃, which is higher than T₁ and T₂. In the evaporator 4 the steam in the hot steam line 22 transfers its heat to the water flow to generate new steam. By doing this, the steam in the hot steam line 22 cools down and condensates.

Downstream from the evaporator 4 a condensate line 24 is provided for discharging the condensate at temperature T₄, which is lower than T₃, out of the evaporator 4. A first condensate tank 26 is integrated in the condensate line 24. The water and CO₂ mixture leaves the evaporator 4 and enters the first condensate tank 26. The condensate tank 26 separates the CO₂ (gas) and the water (liquid). The liquid water is then re-introduced to the evaporator 4 at temperature T₅, through the feed line 6. The CO₂ is removed using a depletion line 25, on which a gas dryer 31 and a gas compressor 33 are arranged. For the removal of the CO₂, the gas compressor 33 controls the pressure in the first condensate tank 26.

A water line 27 also provides condensed water from the second water tank 18 to the first water tank 26.

Additional heat is used for the production of steam in the evaporator 4, which us provided by a heat pump 28 connected to the evaporator 4 via a hot circuit line 30. The heat pump 28 is configured to utilize heat and/or cold from other components of the direct air capture plant 2. Due to the heat pump 28, a self-sustained heating configuration is present in the DAC plant 2.

The heat pump 28 operates two fluid circuits: a hot circuit 28a and a cold circuit 28b. As such, the heat pump 28 comprises a hot side 32a and a cold side 32b.

In the figure, the cold circuit 28b is shown as an open circuit. The heat/cold for the cold side 32b of heat pump 28 can be derived from different energy sources within the DAC plant, in this particular case the water for the cold circuit 28b is provided through a cold circuit line 34 from the second condensate tank 18. A first water tank 36 is integrated in the cold circuit line 24. The output from the cold side 32b of the heat pump 28 is subsequently also stored in a second water tank 38 arranged on a cold water line 35 and consumed in the process by different heat exchangers in different units 40a, 40b of the DAC plant 2 such as the gas dryer 31 in the depletion line 25 or heat exchangers for regulating the flow temperature of condensate return loop in the return steam line 16. The two water tanks 36, 38 allow for buffering of hot and cold water in case of operative fluctuations within the heating system of the DAC plant 2 and its consumers.

In this particular embodiment, the hot circuit 28a is a closed circuit. In the hot circuit 28a water or heat medium fluid, e.g., a hydrocarbon or CO₂, circulates between the heat pump 28 and the evaporator and back via the hot circuit line 30, in which a pump 42 is integrated. The thermal expansion of the water volume is absorbed by an expansion vessel 44. The circuit regulates its flow-through of the evaporator 4 to a set temperature.

The heat medium for the heat pump 28 enters the cold side 32b though the cold circuit line 34 at temperature T₆ and leaves cold side 32b at lower temperature T₇. After the heat transfer and increase of temperature in the heat pump 38, a heat fluid, e.g. water, with a higher T₈ is leaving the hot side 32a of the heat pump 28, and its heat is used for the heat transfer to the water flow within the evaporator 4. The heat fluid is then returned to hot side 32a of the heat pump 28 via the hot circuit line 30 at a lower temperature T₉, to be heated up and circulated again.

At the end of the desorption process there is residual water in the sorbent. It's important to recover as much water as possible in order to minimize the water consumption of the DAC plant 2. Many sorbents are sensitive to oxidation, meaning that their temperature must be reduced before exposure to air. Otherwise, the lifetime of the sorbent will be severely limited. These both problems can be dealt with by flash evaporation of the remaining water in the sorbent, at a pressure of around 0.05 bar. The evaporated water can be condensed by using the cold side 28b of the heat pump 28, eliminating the need for external cooling water while further increasing the efficiency of the DAC plant 2. An additional benefit of this process is that it eliminates the need for an ambient heat source for the heat pump 28, making the DAC plant 2 self-contained. Therefore, less site-specific engineering will be required, leading to increased modularity and reduced CAPEX.

## Claims

1. A method for operating a direct air capture plant (2), comprising the steps of:
- feeding a water flow into an evaporator (4) and heating up the water flow in the evaporator (4) to turn it into a steam flow,
- providing the steam flow to a direct air capture unit (10) comprising a contactor (12) in which a CO₂ sorbent is contained,
- injecting the steam flow through the contractor (12) to discharge CO₂ from the sorbent,
- directing the steam flow from the direct air capture unit (10) to a steam compressor (20), where the steam flow is compressed,
- feeding the compressed steam flow to the evaporator (4) where it transfers its heat to the water flow and at least partly condensates,
- discharging the condensate from the evaporator (4) and feeding it back to the evaporator (4) as the water flow, wherein
- a heat pump (28) provides additional heat to the evaporator (4) for generation of the steam flow, wherein the heat pump (4) utilizes heat and/or cold from components of the direct air capture plant (2).

2. A method according to claim 1,
wherein hot water for a cold side (32b) of the heat pump (28) is stored.

3. A method according to claim 1 or claim 2,
wherein cold water from the cold side (32b) of the heat pump is stored.

4. A method according to any of the claim 3,
wherein the cold water from the cold side (32b) of the heat pump (28) is used to cool down a component of the direct air capture plant (2).

5. A method according to any of the preceding claims,
wherein the condensate is stored in a first condensate tank (26) before feeding it back to the evaporator (4).

6. A method according to any of the preceding claims,
wherein a condensate stream is separated from the steam flow upstream of steam compressor (20) and added to the condensate from the evaporator (4).

7. A direct air capture plant (2), comprising:
- an evaporator (4) for producing a steam flow via heat transfer to a water flow,
- a steam line (8) for the steam flow connecting the evaporator (4) to a direct air capture unit (10) comprising a contactor (12) in which a CO₂ sorbent is contained,
- an injection system (14) configured to inject the steam flow through the contractor (12) to discharge CO₂ from the sorbent,
- a return steam line (16) connecting the direct capture unit (10) to a steam compressor (20) for compressing the steam flow,
- a hot steam line (22) connecting the steam compressor (20) to the evaporator (4), wherein within the evaporator (4) the hot steam line (22) is configured for heat transfer from the steam flow to the water flow,
- downstream from the hot steam line (22) a condensate line (24) for discharging the condensate out of the evaporator (4), wherein the condensate line (24) is connected to a feed line (6) for feeding the condensate back to the evaporator (4) as the water flow,
- a heat pump (28) connected to the evaporator (4) via a hot circuit line (30) for generation of the steam flow, wherein the heat pump (28) is configured to utilize heat and/or cold from components of the direct air capture plant (2).

8. A direct air capture plant (2) according to claim 7, comprising a first water tank (36) upstream of a cold side (32b) of the heat pump (22).

9. A direct air capture plant (2) according to claim 7 or claim 8,
comprising a second water tank (38) downstream of a cold side (32b) of the heat pump (28).

10. A direct air capture plant (2) according to claims 9, comprising a cold water line (35) connecting the cold side (32b) of the heat pump (28) to a component of the direct air capture plant (2).

11. A direct air capture plant (2) according to any of the claims 7 to 10,
comprising a first condensate (26) tank integrated in the condensate line (24).

12. A direct air capture plant (2) according to any of the claims 7 to 11,
comprising a second condensate tank (18) downstream of the steam compressor (20), wherein a water line (27) connects the second condensate tank (18) with the condensate line (24) from the evaporator.
